Europäisches Patentamt

European Patent Office

Office européen des brevets

(19)

(11) Numéro de publication : **0 436 433 B1**

## (12) FASCICULE DE BREVET EUROPEEN

(45) Date de publication du fascicule du brevet :
**02.03.94 Bulletin 94/09**

(51) Int. Cl.[5] : **F24J 2/10,** G02B 17/06,
G02B 19/00

(21) Numéro de dépôt : **90403760.3**

(22) Date de dépôt : **24.12.90**

(54) **Dispositif concentrateur de rayonnements.**

(30) Priorité : **02.01.90 FR 9000014**

(43) Date de publication de la demande :
**10.07.91 Bulletin 91/28**

(45) Mention de la délivrance du brevet :
**02.03.94 Bulletin 94/09**

(84) Etats contractants désignés :
**BE CH DE FR LI LU**

(56) Documents cités :
**GB-A- 2 033 103
APPLIED OPTICS, vol. 19, no. 3, février 1980,
pages 347-351, New York, US; R. WINSTON et
al.: "Design of nonimaging concentrators as
second stages in tandem with image-forming
first-stage concentrators"
APPLIED OPTICS, vol. 21, no. 5, mars 1982,
pages 870-873, New York, US; E.M. KRIT-
CHMAN: "Asymmetric second-stage concentrators"**

(56) Documents cités :
**N.T.I.S. TECHNICAL NOTES, no. 10, partie C,
octobre 1984, Springfield, US; Nasa's Jet Propulsion Laboratory: "Two-stage off-axis cylindrical solar concentrator"
OPTICAL & QUANTUM ELECTRONICS, vol.10,
1978, pages 61-82; I.M. BASSETT et al.: "The
collection of diffuse light onto an extended
absorber"
SOLAR ENERGY, vol. 20, no. 1, 1978, pages
45-55, Pergamon Press; D.R. MILLS etal.:
"Asymmetrical non-imaging cylindrical solar
concentrators"**

(73) Titulaire : **ASSOCIATION POUR LA
RECHERCHE ET LE DEVELOPPEMENT DES
METHODES ET PROCESSUS INDUSTRIELS
(ARMINES)
60, Boulevard Saint-Michel
F-75272 Paris Cédex 06 (FR)**

(72) Inventeur : **Rabl, Ari
29 rue d'Yerres
F-91230 Montgeron (FR)**

(74) Mandataire : **Bruder, Michel et al
Cabinet Michel Bruder Conseil en Brevets 10,
rue de la Pépinière
F-75008 Paris (FR)**

Il est rappelé que : Dans un délai de neuf mois à compter de la date de publication de la mention de la
délivrance du brevet européen toute personne peut faire opposition au brevet européen délivré, auprès
de l'Office européen des brevets. L'opposition doit être formée par écrit et motivée. Elle n'est réputée
formée qu'après paiement de la taxe d'opposition (Art. 99(1) Convention sur le brevet européen).

EP 0 436 433 B1

## Description

La présente invention concerne un concentrateur de rayonnements, notamment pour centrale solaire.

On connaît de tels concentrateurs de rayonnements pour centrale solaire constitués, essentiellement, de réflecteurs cylindriques à base parabolique qui concentrent les rayons solaires sur des tubes cylindriques de section circulaire, disposés au foyer de la parabole et dont les génératrices sont parallèles à celles du réflecteur, ces tubes étant parcourus par un fluide caloporteur. Ces concentrateurs présentent l'avantage de permettre la réalisation de réflecteurs paraboliques à ouverture angulaire importante qui permettent de disposer le tube caloporteur à proximité du centre de gravité du réflecteur, ce qui favorise la tenue mécanique de l'ensemble du concentrateur et permet le pivotement du concentrateur autour de son centre de gravité en minimisant les déplacements relatifs du tube caloporteur, ce qui simplifie les problèmes d'étanchéité de celui-ci.

De tels concentrateurs possèdent une concentration relativement faible, et c'est pourquoi on a proposé d'adjoindre au réflecteur parabolique un réflecteur dit de type "CPC", c'est-à-dire un réflecteur constitué de deux éléments cylindriques dont la base elliptique, est symétrique par rapport à un axe central et dont l'un des foyers est constitué par l'extrémité aval de l'élément de réflecteur qui lui est symétrique par rapport à l'axe central, et l'autre foyer est constitué par l'intersection de la droite joignant l'extrémité aval de cet élément à l'extrémité amont de l'autre élément avec le réflecteur parabolique opposé au tube véhiculant le fluide caloporteur.

Cependant, dans de tels concentrateurs, l'augmentation de concentration fournie par le CPC ne se manifeste de façon significative que pour des réflecteurs paraboliques de faible ouverture angulaire, si bien que les fabricants de capteurs ont préféré, pour les raisons mentionnées précédemment, mettre en oeuvre des capteurs cylindriques associés à de simples réflecteurs paraboliques malgré la concentration relativement faible qui en résulte.

On connaît également par une publication "Applied Optics", vol.19 n°3 de février 1980 pages 347 à 351 un dispositif concentrateur destiné à réaliser la concentration de rayonnements sensiblement parallèles sur un élément récepteur comprenant au moins un élément de concentrateur, l'élément de concentrateur comprenant un réflecteur principal cylindrique, dont la base est constituée d'un arc de parabole, dont l'axe est parallèle à la direction des rayonnements, et un réflecteur secondaire, constitué de deux éléments cylindriques, et dont la base est constituée d'au moins un arc de développante généralisée, dont les concavités se font face, chacun de ces arcs se terminant par une extrémité amont déterminant un segment de droite sur lequel est positionné le foyer de l'arc de parabole constituant la base du réflecteur principal et une extrémité aval, le foyer de chacun des arcs de développante généralisée étant respectivement constitué par l'extrémité de l'arc de parabole faisant face à sa concavité.

La présente invention a pour but de pallier à ces inconvénients en proposant un nouveau type d'association de réflecteurs paraboliques et de réflecteurs de type CPC.

La présente invention a ainsi pour objet un dispositif concentrateur destiné à réaliser la concentration de rayonnements sensiblement parallèles sur un élément récepteur comprenant au moins deux éléments de concentrateur, chaque élément de concentrateur comprenant un réflecteur principal cylindrique, dont la base est constituée d'un arc de parabole, dont l'axe est parallèle à la direction des rayonnements, et un réflecteur secondaire, constitué de deux éléments cylindriques, et dont la base est constituée d'au moins un arc de développante généralisée, dont les concavités se font face, chacun de ces arcs se terminant par une extrémité amont déterminant un segment de droite sur lequel est positionné le foyer de l'arc de parabole constituant la base du réflecteur principal, et une extrémité aval, le foyer de chacun des arcs de développante généralisée étant respectivement constitué par l'extrémité de l'arc de parabole faisant face à sa concavité, caractérisé en ce que le dispositif est constitué d'éléments cylindriques symétriques par rapport à un plan de même direction que les rayonnements, et en ce que l'axe de l'arc de parabole est décalé d'une distance par rapport au plan de symétrie, du côté de l'arc de parabole.

Le concentrateur suivant l'invention permet d'améliorer de façon notable la concentration dans un rapport d'environ 2,5.

De plus, le concentrateur suivant l'invention permet d'atteindre des angles d'ouverture importants, pouvant atteindre 120°, sans perte notable de concentration.

En effet on sait que pour obtenir un rendement optimum d'un concentrateur, on doit considérer que les rayons solaires ne sont pas en totalité parallèles, et que des rayons s'écartant d'un angle $\delta$ de la direction générale de ceux-ci doivent également être réfléchis par le concentrateur sur l'élément récepteur.

On définit ainsi une limite théorique de la concentration égale à : $C_{max} = 1/\sin \delta$

Or, dans un concentrateur de type conventionnel, c'est-à-dire constitué d'un élément cylindrique dont la base est constituée d'un arc de parabole, la concentration est définie par la relation:

$$C = \frac{2XA}{2\pi r} = \frac{\sin\varphi}{\pi} \times \frac{1}{\sin\delta} = \frac{\sin\varphi}{\pi} \times C_{max}. \quad (1)$$

ou :

$X_A$ représente la distance du point A extrême de la parabole à l'axe de celle-ci.

r représente le rayon de la base circulaire d'un tube cylindrique constituant l'élément récepteur véhiculant le fluide caloporteur, et sur lequel sont concentrés les rayonnements.

$\varphi$ représente l'angle d'ouverture de l'arc de parabole c'est-à-dire l'angle formé par le bord extrême de celui-ci avec l'axe de symétrie.

La concentration maximale susceptible d'être fournie par ce type de concentrateur ne peut donc représenter, dans le meilleur des cas, c'est-à-dire lorsque l'angle d'ouverture $\varphi = 90°$, qu'une valeur égale à $1/\pi$ soit 32% de la concentration maximale théorique $C_{max}$.

Comme décrit ci-après la présente invention permet d'atteindre une concentration relative, (c'est-à-dire le rapport de la concentration du concentrateur sur la concentration maximale théorique $C_{max}$ multiplié par 100) de 90% avec des angles d'ouverture $\varphi$ de parabole de 90°.

De plus la présente invention permet, même dans le cas d'angles d'ouverture $\varphi$ de parabole plus importants, de maintenir la concentration fournie par le concentrateur à des valeurs intéressantes.

Ainsi pour un angle d'ouverture $\varphi$ de 120° un concentrateur suivant l'invention peut fournir une concentration de 78%.

Dans une variante intéressante de l'invention, il est possible d'assimiler une développante de cercle généralisée à une ellipse dans la mesure ou l'élément récepteur possède une surface d'échange plane, et il sera ainsi intéressant de mettre en oeuvre des réflecteurs secondaires cylindriques dont la base est de forme elliptique.

On désignera dans la suite du présent texte sous le terme de développante généralisée d'une courbe convexe une courbe telle qu'en tout point (M) de celle-ci la droite symétrique de la tangente à la courbe convexe issue du point M, par rapport à la perpendiculaire à la tangente à la courbe au point M, passe par un point fixe, ou foyer.

On décrira ci-après, à titre d'exemples non limitatifs, diverses formes d'exécution de la présente invention, en référence au dessin annexé sur lequel :

La figure 1 est une demi-vue en coupe verticale et transversale d'un concentrateur suivant l'invention mettant en oeuvre un élément récepteur parallélépipédique.

La figure 2 est une demi-vue en coupe verticale et transversale d'un concentrateur suivant l'invention mettant en oeuvre un élément récepteur cylindrique à base circulaire.

La figure 3 est un graphique représentant le rapport de la concentration fournie par un concentrateur suivant l'invention sur la concentration théorique maximale $C_{max}$ en fonction de l'angle d'ouverture du réflecteur parabolique et de l'angle formé par l'axe de la parabole avec la droite joignant le foyer de celle-ci au début de l'arc de parabole.

La figure 4 est une demi-vue en coupe verticale et transversale d'une variante de mise en oeuvre d'un concentrateur suivant l'invention.

La figure 5 est une vue partielle de la figure 4 à une échelle agrandie.

Les figures 6 et 7 sont des vues, en coupe verticale et transversale, d'un concentrateur suivant l'invention, composé de deux éléments concentrateurs.

La figure 8 est une vue de détail, en coupe verticale et transversale, d'un concentrateur suivant l'invention composé de trois éléments concentrateurs du type de celui représenté sur la figure 2.

Dans les différents modes de réalisation de l'invention décrits ci-après le concentrateur est constitué de deux systèmes de réflecteurs, symétriques par rapport à un plan P, et on ne décrira ci-après en détail qu'un seul système de réflecteurs situé d'un même côté de ce plan P.

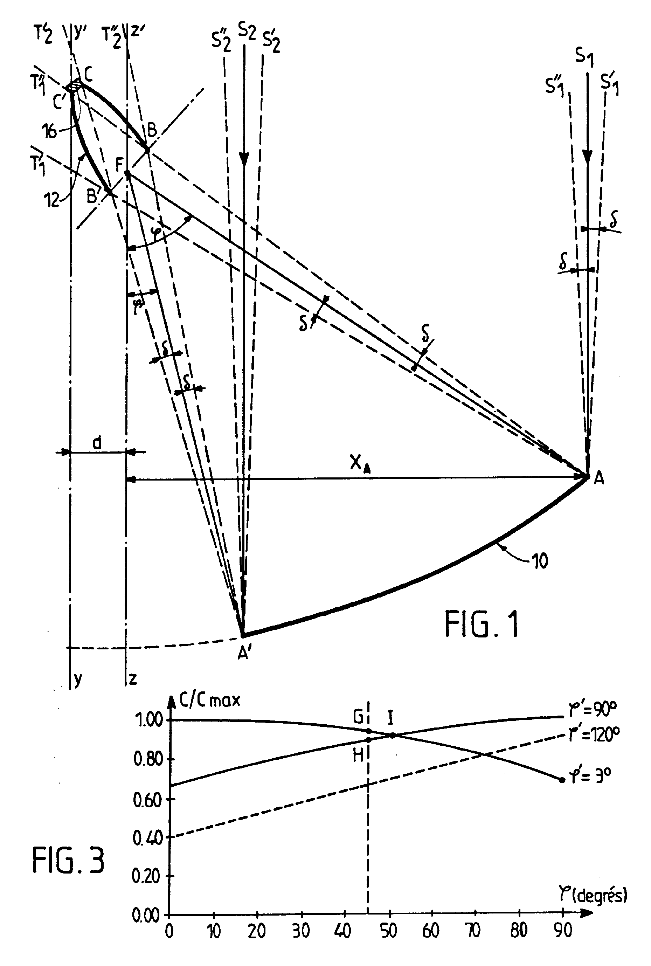

Sur la figure 1 un demi-concentrateur suivant l'invention se compose ainsi essentiellement de deux réflecteurs cylindriques à savoir, un réflecteur principal 10 dont la base est constituée d'un arc de parabole AA', d'axe zz' parallèle à l'axe de symétrie yy' contenu dans le plan P et représentant, comme montré sur la figure 1, l'axe de symétrie du concentrateur, et d'un réflecteur secondaire 12, de type "CPC", dont la base est constituée de deux arcs de développante généralisée à savoir BC et B'C'.

Dans ce premier mode de mise en oeuvre de l'invention l'élément récepteur 16 possède une surface d'échange rectangulaire dont la base est constituée par le segment CC'. Dans ces conditions les développantes généralisées sont constituées de deux arcs d'ellipse respectivement BC et B'C'. Le concentrateur est orienté de façon que les rayons solaires soient parallèles à son axe de symétrie yy'.

L'axe zz', de l'arc de parabole AA' est décalé vers l'extérieur, par rapport à l'axe de symétrie yy' du concentrateur, d'une valeur d. Les rayons parallèles issus du soleil $S_1$ et $S_2$ se réfléchissant respectivement aux deux extrémités A et A' de l'arc de parabole AA' se croisent au foyer F de celle-ci.

Comme exposé précédemment, les rayons solaires $S'_1, S''_1$ et $S'_2, S''_2$ S'écartant respectivement d'un angle de part et d'autre des rayons parallèles $S_1$ et $S_2$ se réfléchissent respectivement en A et A' suivant des rayons

AT'$_1$ et AT"$_1$ d'une part et A'T'$_2$ et A'T"$_2$ d'autre part.

En conséquence tous les rayons incidents, qui sont contenus dans l'angle S"$_1$ AS'$_1$, se réfléchissent en A sur l'arc de parabole AA' et ressortent de celui-ci à l'intérieur d'un angle T"$_1$ A T'$_1$, et les rayons solaires incidents contenus dans l'angle S"$_2$ A'S'$_2$ se réfléchissent en A' sur l'arc de parabole AA' et ressortent de celui-ci à l'intérieur d'un angle T"$_2$ A' T'$_2$. L'intersection de ces deux angles définit ainsi un segment BB', base du plan focal du réflecteur principal parabolique, à l'intérieur duquel passent tous les rayons solaires réfléchis par l'arc de parabole AA', et sensiblement au centre duquel est disposé le foyer F de l'arc de parabole AA'.

Pour concentrer ces rayons, on utilise un réflecteur cylindrique de type CPC, vis-à-vis duquel le segment BB' joue le rôle d'objet virtuel, qui est constitué de deux éléments cylindriques dont la base est faite des deux arcs d'ellipse BC et B'C'.

Les foyers respectifs C',A' et C,A de chacun des arcs d'ellipse BC et B'C' sont constitués d'une part par l'extrémité aval de l'autre arc d'ellipse, respectivement C' et C, et par l'intersection de la droite joignant respectivement l'extrémité aval C,C' de cet arc d'ellipse BC,B'C' à l'extrémité amont B',B de l'autre arc d'ellipse B'C',BC avec l'arc de parabole AA'. Ainsi l'arc d'ellipse BC a pour foyers les points C' et A' et l'arc d'ellipse B'C' a pour foyers les points C et A.

Suivant une particularité propre aux réflecteurs de type "CPC" tous les rayons pénétrant à l'intérieur de celui-ci passent par une surface plane dont un côté est constitué par une génératrice du cylindre constituant le réflecteur CPC et l'autre côté par le segment CC', sans qu'il y ait de rayons prisonniers entre les éléments constituant les parois du réflecteur CPC.

En effet, si l'on considère les rayons extrêmes, à savoir d'une part les rayons issus de S'1 se réfléchissant en A, ces rayons arrivent en B' et se réfléchissent sur l'arc d'ellipse B'C' suivant un rayon B'C, et de même les rayons S"$_1$ extrêmes opposés se réfléchissant en A passent par B où ils ne sont pas déviés et aboutissent en C'. En conséquence tous les rayons incidents compris dans l'angle S'$_1$ AS"$_1$ et se réfléchissant en A passent bien entre les points C et C'.

De la même façon les rayons compris dans l'angle S"$_2$ A'S'$_2$ se réfléchissent à l'autre extrémité A' de l'arc de parabole AA' pour pénétrer dans le réflecteur secondaire 12 et aboutir entre les points C et C'.

La concentration réalisée par le réflecteur secondaire CPC est ainsi égale au rapport : BB'/CC'.

Dans cette forme de réalisation l'élément récepteur 16, constitué d'un tube cylindrique de section rectangulaire et de base CC' à l'intérieur duquel circule un fluide caloporteur est disposé en contact avec les extrémités aval du réflecteur 12.

Dans une variante de réalisation de l'invention l'élément récepteur 16 est constitué d'un capteur électrique transformant l'énergie solaire en énergie électrique.

On préfère généralement cependant, dans le cas de capteurs thermiques, utiliser des tubes cylindriques à base circulaire, en raison d'une part de leur rapport surface/volume intéressant qui représente le meilleur compromis du point de vue des déperditions thermiques, et d'autre part de leur facilité d'approvisionnement.

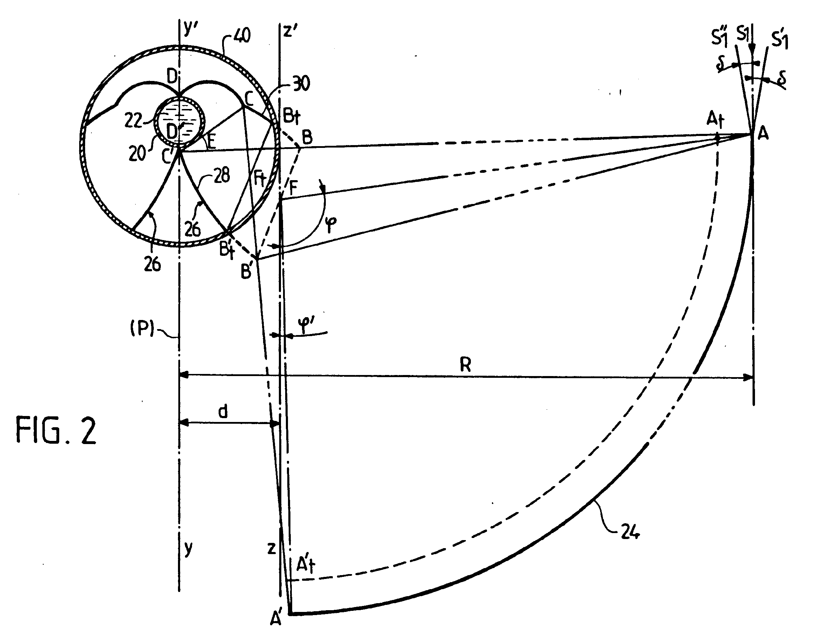

Sur la figure 2 on a représenté un demi-concentrateur pourvu d'un élément récepteur constitué d'un tube cylindrique 20 à base circulaire, dans lequel circule un fluide caloporteur 22. Le concentrateur dont, pour les raisons de symétrie précisées précédemment, on a seulement représenté la partie droite, comprend deux réflecteurs cylindriques à génératrices parallèles à celles du tube récepteur 20, à savoir un réflecteur principal 24, dont la base est constituée d'un arc de parabole AA' de foyer F et d'axe zz' parallèle à l'axe de symétrie yy' du concentrateur et qui est décalé par rapport à celui-ci d'une quantité d, et un réflecteur secondaire 26 constitué de deux éléments de réflecteurs 28 et 30 se faisant face et de base respectivement constituées de deux arcs BCD et B'C'D'.

Chacun de ces deux arcs est constitué d'un arc d'ellipse, respectivement BC et B'C', définissant, comme précédemment deux segments, à savoir un segment amont BB' et un segment aval CC'. Chacun des arcs d'ellipse est suivi d'un arc de développante de cercle, respectivement CD et C'D'. Le réflecteur secondaire 26 est disposé de façon que le segment CC' soit tangent, en E, au cercle constituant la base du tube échangeur 20.

Comme précédemment Tous les rayons solaires faisant des angles δ de part et d'autre de leur direction principale yy' se concentrent donc sur une surface rectangulaire dont un côté est constitué par la génératrice du cylindre constituant le réflecteur secondaire 26 et l'autre côté par le segment aval CC'. Cette surface joue donc le rôle d'objet virtuel par rapport au reste du réflecteur, à savoir la surface dont la base est constituée de deux arcs de développante de cercle, respectivement CD et C'D'. La seconde partie du réflecteur de type CPC, en raison de la forme de sa base en forme de développante de cercle ne change pas la concentration puisque, par définition, la surface dont la base est CC', et qui joue le rôle d'objet virtuel, est égale à celle du demi-cylindre ayant pour base le demi-cercle DD'.

Par définition géométrique de la développante de cercle tous les rayons lumineux issus de la surface dont la base est EC atteindrons la portion ED de l'élément récepteur 20 soit directement, soit après réflexion sur le réflecteur de base CD. De la même façon les rayons incidents issus de la surface dont la base est EC' atteindrons la portion de l'élément récepteur 20 de base ED' soit directement soit après réflexion sur l'arc de développante de cercle C'D'.

La concentration totale obtenue par un concentrateur suivant le présent mode de réalisation est de l'ordre de 68% de la limite théorique $C_{max}$ déterminée précédemment.

Le concentrateur suivant l'invention est déterminé principalement par deux angles, à savoir les angles φ' et φ, c'est-à-dire les angles formés respectivement par la droite joignant le foyer F de l'arc de parabole AA' au point A' et au point A de cet arc avec l'axe zz' de la parabole. Le rapport de la concentration fournie par le concentrateur suivant l'invention sur la concentration maximale théorique $C_{max}$ s'exprime par la relation :

$$\frac{C}{C_{max}} = \frac{\cos\left(\frac{\varphi-\varphi'}{2}\right)\left[\cos\left(\frac{\varphi+\varphi'}{2}\right) + \cos\left(\frac{\varphi-\varphi'}{2}\right)\right]}{\left[1 + \cos\left(\frac{\varphi+\varphi'}{2}\right)\cos\left(\frac{\varphi-\varphi'}{2}\right)\right]} = AA'/CC' \qquad (2)$$

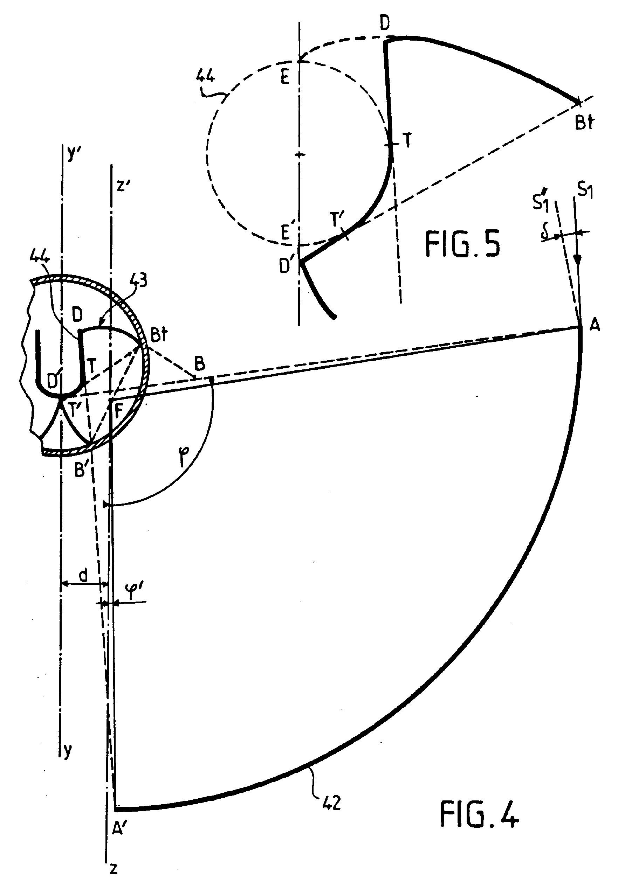

On a représenté sur la figure 3 cette équation sous forme d'abaque en portant en ordonnée le rapport de la concentration fournie par un concentrateur, en fonction de l'angle d'ouverture φ du concentrateur, pour différentes valeurs de l'angle φ' à savoir 3°,90° et 120°. On constate ainsi sur ce graphique que dans le cas de la réalisation représentée sur la figure 2, pour une valeur de φ = 90° et φ'= 3° le rapport de la concentration du présent concentrateur sur la valeur maximum théorique Cmax est d'environ 68%.

Afin de réduire l'encombrement ainsi que le prix de fabrication du concentrateur, on peut tronquer le réflecteur secondaire 26, comme représenté sur la figure 2. L'expérience montre qu'en divisant par deux la longueur de celui-ci, la concentration fournie par le concentrateur diminue seulement d'environ 10%. Ainsi, dans la pratique, le réflecteur secondaire 26 est donc délimité par les arcs $DCB_t$ et D' C' $B'_t$. Dans la mesure où le segment BB' subit une translation en direction de l'élément récepteur 20 on est conduit à déplacer également, d'une même quantité, l'arc de parabole AA' qui vient ainsi en $A_tA'_t$ de façon que le foyer de celui-ci se trouve en $F_t$ sensiblement au milieu du segment $B_tB'_t$.

De façon à minimiser les pertes thermiques subies par le concentrateur, on enferme l'élément récepteur 20, ainsi que le réflecteur secondaire 26 à l'intérieur d'une enveloppe de verre cylindrique 40, mise sous vide, dont les génératrices sont parallèles à celles de l'élément récepteur 20.

Le diamètre de l'enveloppe de verre 40 est de l'ordre de quatre à cinq fois le diamètre de l'élément récepteur 20, et ainsi, dans la présente réalisation, pour un diamètre de l'élément récepteur de l'ordre de 2,5cm on utilise une enveloppe de verre de 11cm de diamètre, à laquelle correspond un réflecteur principal 24 de rayon R d'environ 5 mètres.

Dans la variante de mise en oeuvre représentée sur les figures 4 et 5, un demi-concentrateur suivant l'invention se compose d'une réflecteur principal cylindrique 42 dont la base est constituée, comme précédemment, d'un arc de parabole AA' et d'un réflecteur secondaire 43. La base de ce dernier est constituée de deux arcs de développante de cercle généralisée, se faisant face, respectivement BD et B'D', dont les foyers respectifs sont constitués par les extrémités A' et A de l'arc de parabole AA'. L'élément récepteur est constitué d'une cellule photo-voltaïque 44 dont la base est constituée d'un arc de cercle TT' (appartenant au cercle à partir duquel sont construites les développantes généralisées BD et B'D') et de deux segments de droite TD et T'D' tangents audit cercle et passant respectivement par les extrémités inférieure A' et supérieure A de l'arc de parabole AA'. De façon à éviter que la partie supérieure du réflecteur de base BD empêche les rayons $S_1$, se réfléchissant en A suivant une incidence $S''_1$ décalée d'un angle δ vers l'intérieur du réflecteur principal, de pénétrer dans le réflecteur secondaire en est contraint de tronquer celui-ci de façon que sa base devienne $B_t$D.

Dans ces conditions, et comme précédemment le segment $B_t$B'joue le rôle d'objet virtuel par rapport aux deux développantes de cercle généralisée $B_t$D et B'D' et les rayons arrivant aux points extrêmes respectifs B' et $B_t$ du segment B'$B_t$ et provenant des foyers respectifs A et A' des développantes de cercle généralisés arrivent tangentiellement aux parois respectives TD et T'D' de l'absorbeur suivant le principe même de construction de la développante généralisée, tel qu'exposé précédemment. Les autres rayons seront donc quant à eux soit absorbés directement ou après réflexion par l'absorbeur 44.

On pourrait bien entendu, dans une variante de mise en oeuvre de la présente forme de réalisation, utiliser un élément récepteur 44 dont la base serait de forme circulaire. Dans ce cas il conviendrait de prolonger chacun des arcs de développante de cercle généralisée $B_t$ D et B'D' par des arcs de développante de cercle DE, D'E' reliant respectivement les points D et D' aux points E et E' intersections de l'élément récepteur 44 avec l'axe de symétrie yy' de concentration, comme représenté en traits pointillés sur la figure 5. Une telle forme de mise en oeuvre est particulièrement intéressante du point de vue de la fabrication du réflecteur secondaire en raison de la continuité de la courbure de celui-ci.

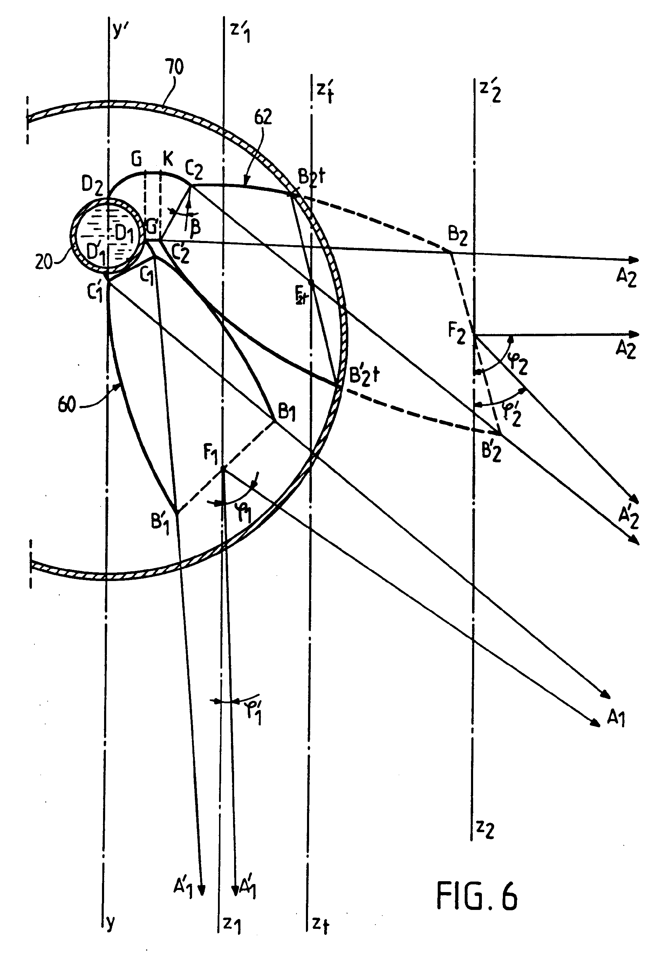

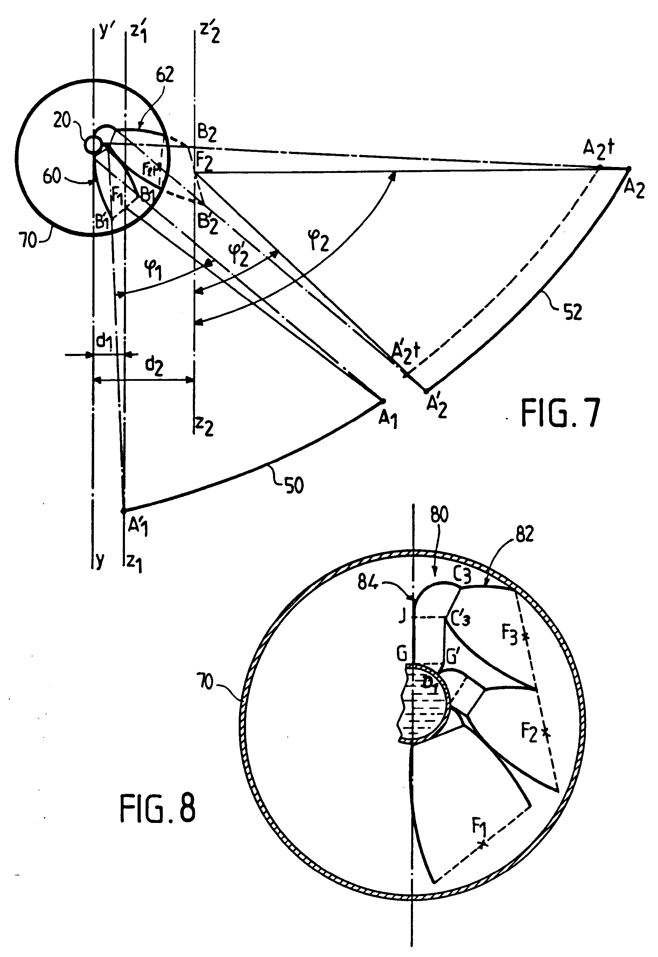

Le concentrateur suivant l'invention peut également être constitué, comme représenté sur les figures 6 et 7, de quatre éléments concentrateurs du type de celui décrit précédemment, symétriques deux à deux par rapport au plan de symétrie P contenant l'axe yy'. Pour les mêmes raison de symétrie que précédemment, une seule moitié du concentrateur sera décrite ci-après.

Chacun des demi-concentrateurs est constitué d'un réflecteur principal cylindrique dont la base est un arc de parabole, respectivement 50 et 52, auquel est associé un réflecteur secondaire cylindrique de type "CPC", respectivement 60 et 62.

Le réflecteur principal 50 du premier élément concentrateur se compose ainsi d'un cylindre dont la base est un arc de parabole $A'_1 A_1$, d'axe $z_1z'_1$ dont le foyer $F_1$ est décalé d'une distance $d_1$ de l'axe de symétrie yy' du concentrateur et dont les segments $F_1 A'_1$ et F1 A1 forment respectivement des angles $\varphi'_1$ de 3° et $\varphi 1$ de 45° avec l'axe $z_1z'_1$ de l'arc de parabole $A'_1A_1$.

Le réflecteur secondaire 60 de ce premier élément concentrateur est constitué, quant à lui, d'un réflecteur cylindrique du type décrit précédemment, dont la base est constitué de deux arcs d'ellipse $B'_1C'_1$ et $B_1C_1$ respectivement prolongés par deux arcs de développante de cercle respectivement $C'_1D'_1$ et $C_1D_1$.

En se référant à la courbe de la figure 3, on constate que le point G de celle-ci, qui caractérise ce premier élément concentrateur, correspondant à une concentration relative d'environ 93%.

Le réflecteur principal 52 du second élément concentrateur se compose également d'un cylindre dont la base est un arc de parabole $A'_2A_2$ d'axe $z_2z'_2$, dont le foyer $F_2$ est décalé d'une distance $d_2$ de l'axe de symétrie yy' du concentrateur et dont les segments $F_2A'_2$ et $F_2A_2$ forment respectivement des angles $\varphi_2'$ = à l'angle $\varphi 1$ du premier élément concentrateur, soit une valeur de 45°, et $\varphi_2$ de 90°.

Le réflecteur secondaire 62 de ce second élément concentrateur est constitué quant à lui d'un réflecteur cylindrique, du type décrit précédemment, dont la base est constituée de deux arcs d'ellipse $B'_2C'_2$ et B2C2.

Le segment $C_2C'_2$ reliant les extrémités aval $C_2$ et $C'_2$ du réflecteur secondaire 62 n'étant pas en contact avec le cercle constituant la base de l'élément récepteur 20 l'on utilise des éléments de parois $C'_2 D_1$ et $C_2KGD_2$ pour "transporter" l'objet virtuel dont la base est constituée par le segment C2 C'2 jusqu'à un segment GG' (en pointillés) tangent au cercle constituant la base du tube 20. Ces éléments de paroi sont constitués d'une droite $C'_2 D_1$ et d'une courbe complexe, c'est-à-dire composée de trois arcs comprenant successivement un arc de cercle $C_2K$, centré en $C'_2$ et de rayon égal au segment $C'_2C_2$, d'un segment de droite KG parallèle au segment $C'_2 D_1$ et un arc de développante de cercle GD2.

Comme représenté sur la figure 6, et comme expliqué dans la réalisation précédente illustrée par la figure 2, les rayons provenant du soleil et parallèles à l'axe yy' du concentrateur ainsi que les rayons décalés de part et d'autre de cet axe d'un angle $\delta$ passent par le segment $C_2 C'_2$.

L'arc $C_2K$ étant constitué d'un arc de cercle de rayon $C_2C'_2$, on comprend que tous les rayons traversant le segment $C_2C'_2$ et venant frapper l'arc $C_2K$ se réfléchissent vers l'intérieur de celui-ci et en conséquence traversent le segment $C'_2K$. Ce dernier se comporte alors par rapport au système comme un objet virtuel. De la même façon tous les rayons lumineux traversant le segment $C'_2 K$ soit, traversent directement, soit se réfléchissent sur les segments KG ou $C'_2D_1$ et traversent donc le segment G'G. Ce dernier segment se comporte alors comme un objet virtuel par rapport à la suite du réflecteur, et l'on est dès lors ramené au cas de figure précédent et les arcs de développante de cercle GD2 et $G'D_1$ transmettront, sans concentration supplémentaire, tous les rayons traversant le segment GG' à la surface du cylindre $D_1D_2$.

Le graphique de la figure 3 fournit la concentration relative de ce second élément concentrateur, qui, pour des raisons de symétrie, des angles $\varphi$ et $\varphi'$ dans la formule (2) est caractérisé par le point H qui correspond à des angles $\varphi_2'$ = 45° et $\varphi_2$ = 90°. Cette concentration relative est ainsi voisine de 90%.

On démontre que la concentration globale du concentrateur est maximale lorsque les concentrations fournies par les deux éléments concentrateurs sont égales et les deux points G et H de la figure 6 viennent dès lors se confondre au point I. En ce point I chaque élément concentrateur, ainsi que le concentrateur dans son entier possèdent un rapport de concentration de 90% pour des angles

$$\varphi_1' \text{ de } 3°, \varphi_1 = \varphi'_2 = 50° \text{ et } \varphi_2 = 90°.$$

Comme précédemment, pour des raisons de coût et d'encombrement, le réflecteur secondaire 62 du second élément concentrateur est tronqué de sorte que ses extrémités amont $B_2$ et $B'_2$ viennent respectivement en $B_{2t}$ et $B'_{2t}$. Comme montré sur la figure 7 l'arc de parabole $A'_2A_2$ et son foyer $F_2$ sont déplacés de la même quantité et viennent respectivement en $F_{2t}$ et en $A'_{2t}A_{2t}$.

Afin de minimiser les pertes thermiques le concentrateur est disposé dans un tube de verre cylindrique 70 de génératrices parallèles aux génératrices des réflecteurs et de l'élément récepteur de chaleur 20, ce tube étant mis sous vide.

La concentration d'un tel concentrateur, est augmentée, par rapport à la réalisation précédente de façon notable puisque, comme montré précédemment, son pouvoir de concentration par rapport à la concentration maximale théorique est de l'ordre de 90%.

Bien évidemment, et comme montré de façon schématique sur la figure 8, on peut, afin de diminuer le volume occupé par les réflecteurs secondaires, et ainsi le diamètre du tube de verre et donc le coût de celui-ci, mettre en oeuvre un ou plusieurs éléments concentrateurs supplémentaires.

Sur la figure 8 un troisième élément concentrateur est utilisé, et l'on n'a pas représenté les trois réflecteurs primaires qui sont constitués comme précédemment.

Le réflecteur secondaire 80 de ce troisième élément concentrateur se compose ainsi d'une première partie dont la base est en forme d'arc d'ellipse, comme vu précédemment, et d'une seconde partie complexe 84 de base constituée d'un arc de cercle $C_3 J$ centrée en $C'_3$ et de rayons $C'_3 C_3$ aboutissant à un segment $J_3 C'_3$ à travers lequel passent tous les rayons traversant $C_3 C'_3$ et qui joue le rôle d'objet virtuel par rapport à la suite du réflecteur. La base du réflecteur 84 se continue par deux segments de droite JG et $C'_3 G'$ aboutissant à un segment GG' par lequel passent tous les rayons traversants $JC'_3$, et qui se comporte comme un objet virtuel par rapport à la suite du réflecteur. La base du réflecteur 84 se termine par un arc de développante de cercle $G'D_1$ de sorte que l'on est ainsi ramené au problème précédent, et tous les rayons traversant le segment $C_3 C'_3$ viennent frapper l'arc de cercle GG' de l'élément récepteur (20). Cette disposition permet de mettre en oeuvre des réflecteurs secondaires moins volumineux, puisque les réflecteurs secondaires des deuxième et troisième éléments concentrateurs sont moins importants que ne le serait un seul réflecteur secondaire réalisant la même fonction.

## Revendications

1. Dispositif concentrateur destiné à réaliser la concentration de rayonnements sensiblement parallèles sur un élément récepteur (16,20,44) comprenant au moins deux éléments de concentrateur, chaque élément de concentrateur comprenant un réflecteur principal cylindrique, dont la base est constituée d'un arc de parabole (AA'), dont l'axe (zz') est parallèle à la direction des rayonnements, et un réflecteur secondaire, constitué de deux éléments cylindriques (BCD,B'C'D'), et dont la base est constituée d'au moins un arc de développante généralisée (BC, B'C'), dont les concavités se font face, chacun de ces arcs se terminant par une extrémité amont (B,B') déterminant un segment de droite (BB') sur lequel est positionné le foyer (F) de l'arc de parabole (AA') constituant la base du réflecteur principal (10,24,50,52), et une extrémité aval (C,C'), le foyer de chacun des arcs de développante généralisée (BD et B'D') étant respectivement constitué par l'extrémité (A',A) de l'arc de parabole (AA') faisant face à sa concavité, caractérisé en ce que le dispositif est constitué d'éléments cylindriques symétriques par rapport à un plan (P) de même direction que les rayonnements, et en ce que l'axe (zz') de l'arc de parabole est décalé d'une distance (d) par rapport au plan de symétrie (P), du côté de l'arc de parabole (AA').

2. Dispositif concentrateur suivant la revendication 1 caractérisé en ce que la base de chaque élément du réflecteur secondaire est constituée d'au moins un arc (BC,B'C') en forme d'ellipse dont les foyers (C',A'; C,A) sont constitués d'une part par l'extrémité aval (C';C) de l'autre arc d'ellipse (B'C'; BC) et par l'intersection de la droite (CB';C'B) joignant l'extrémité aval (C;C') de cet arc d'ellipse (BC;B'C') à l'extrémité amont (B';B) de l'autre arc d'ellipse (B'C';BC) avec l'arc de parabole (A'A).

3. Dispositif suivant la revendication 2 caractérisé en ce que l'élément récepteur (16) comporte une face amont plane en contact avec les génératrices aval issues des extrémités aval (C,C') des deux éléments (BC,B'C') constituant le réflecteur secondaire.

4. Dispositif suivant la revendication 3 caractérisé en ce que l'élément récepteur (16) est constitué d'un tube cylindrique de section rectangulaire, parcouru par un fluide caloporteur.

5. Dispositif suivant la revendication 2 caractérisé en ce que l'élément récepteur (16) est constitué d'un capteur électrique.

6. Dispositif suivant la revendication 1 caractérisé en ce que l'élément récepteur est constitué d'un tube cylindrique de section circulaire les éléments constituant le réflecteur secondaire ayant des bases constituées d'une développante de cercle généralisée, (BC,B'C') réunie à la surface de l'élément récepteur par au moins un arc de développante de cercle (DE,D'E').

7. Dispositif suivant la revendication 6 caractérisé en ce que l'élément récepteur (20) est tangent à un plan dont la base est constituée par un segment (CC') joignant les extrémités aval (C,C') des arcs de développante de cercle généralisée (BC;B'C') et par les génératrices du réflecteur partant de ces extrémités

7

(C,C').

**8.** Dispositif suivant l'une quelconque des revendications précédentes caractérisé en ce que l'angle ($\varphi'$) compris entre l'axe (zz') issu du foyer (F) de l'arc de parabole (A'A) constituant la base du réflecteur principal et le segment de droite joignant ce foyer (F) à l'extrémité (A') de l'arc de parabole (AA') le plus proche de l'axe de symétrie (yy') du concentrateur est compris entre 1° et 5°.

**9.** Dispositif suivant l'une quelconque des revendications précédentes caractérisé en ce que l'angle ($\varphi$) compris entre l'axe (zz') issu du foyer (F) de l'arc de parabole (A'A) constituant la base du réflecteur principal et le segment de droite joignant ce foyer (F) à l'extrémité (A) de l'arc de parabole (AA') le plus éloigné de l'axe de symétrie (yy') du concentrateur est compris entre 30° et 120°.

**10.** Dispositif suivant la revendication 6 caractérisé en ce qu'il comporte quatre éléments concentrateurs symétriques deux à deux, par rapport au plan de symétrie (P) du concentrateur, les arcs de développante généralisée étant constitués d'arcs d'ellipse ($B'_1C'_1$, $B_1 C_1$) le réflecteur secondaire (60) d'un premier élément concentrateur étant tangent au plan de symétrie (P) du dispositif concentrateur, et comprenant deux parties cylindriques à base de développante de cercle joignant respectivement les extrémités aval ($C'_1;C_1$) des deux arcs d'ellipse ($B'_1C'_1;B_1C_1$) respectivement à la partie inférieure ($D'_1$) et sensiblement au milieu de la paroi du demi-cercle de base de l'élément récepteur (20), ou point de jonction ($D_1$), et un second élément concentrateur, disposé du même côté que le premier par rapport au plan (P), comprenant deux réflecteurs cylindriques dont la base est respectivement constituée de deux arcs d'ellipse ($B'_2C'_2;B_2C_2$) respectivement prolongés d'un segment de droite ($C'_2D_1$) joignant l'extrémité aval du premier arc d'ellipse ($B'_2C'_2$) au point de jonction ($D_1$), et d'un arc de développante de cercle ($D_2G$) issu de l'intersection ($D_2$) supérieure dudit cercle avec l'axe de symétrie (yy') et se terminant à l'intersection de celui-ci avec la tangente (G'G) audit cercle au point de jonction ($D_1$) suivi d'un segment de droite (GK) parallèle et de longueur égale au susdit segment de droite ($C'_2D_1$) et d'un arc de cercle ($KC_2$) de rayon égal au segment ($C'_2C_2$) joignant les deux extrémités aval ($C'_2$ et $C_2$).

**11.** Dispositif suivant l'une quelconque des revendications précédentes caractérisé en ce que les réflecteurs secondaire (26,43,60,62,80) sont contenus dans un tube cylindrique (40,70) transparent aux rayonnements et dont les génératrices sont parallèles à celles des réflecteurs.

**12.** Dispositif suivant la revendication 10 caractérisé en ce que le tube cylindrique (40,70) est étanche à l'atmosphère et est mis sous vide.

**Patentansprüche**

**1.** Konzentriervorrichtung zum Konzentrieren von im wesentlichen parallelen Strahlen auf ein Empfängerelement (16, 20, 44) mit mindestens zwei Bündelungselementen, wobei jedes Bündelungselement einen zylindrischen Hauptreflektor aufweist, dessen Basis einen Parabelbogen (AA') bildet, dessen Achse (zz') parallel zur Richtung der Strahlen verläuft, sowie einen Sekundärreflektor, bestehend aus zwei zylindrischen Elementen (BCD, B'C'D'), dessen Basis aus mindestens einem verallgemeinerten Evolventenbogen (BC, B'C') besteht, deren Hohlflächen einander gegenüberliegen, wobei jeder dieser Bögen in einem Vorderende (B, B') endet, welche ein Segment einer Geraden (BB') definieren, auf dem sich der Brennpunkt (F) des Parabelbogens (AA') befindet, welcher die Basis des Hauptreflektors (10, 24, 50, 52) bildet, sowie einem hinteren Ende (C, C'), wobei der Brennpunkt jedes verallgemeinerten Evolventenbogens (BD und B'D') jeweils aus dem Ende (A', A) des Parabelbogens (AA') gebildet wird, welcher seiner Hohlfläche gegenüberliegt, dadurch gekennzeichnet, daß die Vorrichtung aus zylindrischen Elementen besteht, welche bezüglich einer Ebene (P) gleicher Richtung wie die Strahlen symmetrisch sind, sowie dadurch, daß die Achse (zz') des Parabelbogens auf der Seite des Parabelbogens (AA') um einen Abstand (d) bezüglich der Symmetrieebene (P) versetzt ist.

**2.** Bündelungsvorrichtung nach Anspruch 1, dadurch gekennzeichnet, daß die Basis jedes Elements des Sekundärreflektors aus mindestens einem ellipsenförmigen Bogen (BC, B'C') besteht, dessen Brennpunkte (C'A; C,A) zum einen vom hinteren Ende (C'; C) des anderen ellipsenförmigen Bogens (B'C'; BC) und durch den Schnittpunkt der Geraden (CB'; C',B), welche das hintere Ende (C'; C) dieses ellipsenförmigen Bogens (BC; B'C') mit dem vorderen Ende (B'; B) des anderen ellipsenförmigen Bogens (B'C'; BC) mit dem Parabelbogen (A'A) verbindet, gebildet werden.

3. Vorrichtung nach Anspruch 2, dadurch gekennzeichnet, daß das Empfängerelement (16) eine ebene Vorderseite aufweist, welche die hinteren Erzeugenden berührt, die aus den hinteren Enden (C, C') der beiden Elemente (BC, B'C') hervorgehen, welche den Sekundärreflektor bilden.

4. Vorrichtung nach Anspruch 3, dadurch gekennzeichnet, daß das Empfängerelement (16) aus einer zylindrischen Röhre rechteckigen Querschnitts besteht, welche von einem Warmeaustauschfluid durchströmt wird.

5. Vorrichtung nach Anspruch 2, dadurch gekennzeichnet, daß das Empfängerelement (16) aus einem Elektrofühler besteht.

6. Vorrichtung nach Anspruch 1, dadurch gekennzeichnet, daß das Empfängerelement aus einer zylindrischen Röhre rechteckigen Querschnitts besteht, wobei die Elemente, die den Sekundärreflektor bilden, Basen aufweisen, welche von einer verallgemeinerten Kreisevolvente (BC, B'C') gebildet werden, die an der Oberfläche des Empfängerelements durch mindestens einen Kreisevolventenbogen (DE, D'E') verbunden sind.

7. Vorrichtung nach Anspruch 6, dadurch gekennzeichnet, daß das Empfängerelement (20) eine Ebene tangiert, deren Basis aus einem Segment (CC') besteht, das die hinteren Enden (C, C') der verallgemeinerten Kreisevolventenbögen (BC; B'C') verbindet, sowie aus den Erzeugenden des Reflektors, die von diesen Enden (C, C') ausgehen.

8. Vorrichtung nach einem der vorstehenden Ansprüche, dadurch gekennzeichnet, daß der Winkel ($\varphi$) zwischen der aus dem Brennpunkt (F) des Parabelbogens (A'A), der die Basis des Hauptreflektors bildet, hervorgegangenen Achse (zz') und dem Geradensegment, welches diesen Brennpunkt (F) mit dem Ende (A') des Parabelbogens (AA'), das der Symmetrieachse (yy') der Bündelungsvorrichtung am nächsten liegt, verbindet, zwischen 1° und 5° liegt.

9. Vorrichtung nach einem der vorstehenden Ansprüche, dadurch gekennzeichnet, daß der Winkel ($\varphi$) zwischen der Achse (zz'), welche aus dem Brennpunkt (F) des Parabelbogens (AA') hervorgegangenen ist, der die Basis des Hauptreflektors bildet, und dem Geradensegment, welches diesen Brennpunkt (F) mit dem von der Symmetrieachse (yy') der Bündelungsvorrichtung am weitesten entfernten Ende (A) des Parabelbogens (AA') verbindet, zwischen 30° und 120° liegt.

10. Vorrichtung nach Anspruch 6, dadurch gekennzeichnet, daß sie vier Bündelungselemente aufweist, die jeweils paarweise symmetrisch bezüglich der Symmetrieebene (P) der Bündelungsvorrichtung sind, wobei die verallgemeinerten Evolventenbögen aus Ellipsenbögen (B'$_1$C'$_1$, B$_1$C$_1$) bestehen und der Sekundärreflektor (60) eines ersten Bündelungselements die Symmetrieebene (P) der Bündelungsvorrichtung tangiert und zwei zylindrische Bereiche auf der Basis einer Kreisevolventen enthält, welche jeweils die hinteren Enden (C'$_1$, C$_1$) der beiden Ellipsenbögen (B'$_1$C'$_1$, B$_1$C$_1$) jeweils am unteren Ende (D'$_1$) und im wesentlichen in der Mitte der Wand des Basishalbkreises des Empfängerelements (20), oder am Verbindungspunkt (D$_1$) verbinden, und wobei ein zweites Bündelungselement, welches bezüglich der Ebene (P) auf der gleichen Seite angeordnet ist wie das erste, zwei zylindrische Reflektoren umfaßt, deren Basis jeweils aus zwei Ellipsenbögen (B'$_2$C'$_2$, B$_2$C$_2$) gebildet wird, die jeweils durch ein Geradensegment (C'$_2$D$_1$) verlängert sind, welches das hintere Ende des ersten Ellipsenbogens (B'$_2$C'$_2$) mit dem Verbindungspunkt (D$_1$) verbindet, und einem Kreisevolventenbogen (D$_2$G), der aus dem oberen Schnittpunkt (D$_2$) dieses Kreises mit der Symmetrieachse (yy') hervorgeht und am Schnittpunkt derselben mit der Tangente (G'G) am genannten Kreis am Verbindungspunkt (D$_1$) endet, gefolgt von einem zu dem o.g. Geradensegment (C'$_2$D$_1$) parallelen und gleichlangen Geradensegment (GK) sowie einem Kreisbogen (KC$_2$) gleichen Halbmessers wie des Segments (C'$_2$C$_2$), welches die beiden hinteren Enden (C'$_2$ und C$_2$) verbindet.

11. Vorrichtung nach einem der vorstehenden Ansprüche, dadurch gekennzeichnet, daß die Sekundärreflektoren (26, 43, 60, 62, 80) in einer für Strahlen durchlässigen zylindrischen Röhre (40, 70) enthalten sind, deren Erzeugenden parallel zu denen der Reflektoren verlaufen.

12. Vorrichtung nach Anspruch 10, dadurch gekennzeichnet, daß die zylindrische Röhre (40, 70) luftdicht und evakuiert ist.

## Claims

1. Concentrator device intended for effecting concentration of substantially parallel radiations on a receiver element (16, 20, 44) comprising at least two concentrator elements, each concentrator element comprising a cylindrical principal reflector whose base is constituted by an arc of parabola (AA'), whose axis (zz') is parallel to the direction of the radiations, and a secondary reflector, constituted by two cylindrical elements (BCD, B'C'D'), and whose base is constituted by at least one arc of generalized involute (BC, B'C'), whose concavities face each other, each of these arcs terminating in an upstream end (B, B') determining a segment of straight line (BB') on which is positioned the focus (F) of the arc of parabola (AA') constituting the base of the principal reflector (10, 24, 50, 52), and a downstream end (C, C'), the focus of each of the arcs of generalized involute (BD and B'D') being respectively constituted by the end (A', A) of the arc of parabola (AA') facing its concavity, characterized in that the device is constituted by cylindrical elements symmetrical with respect to a plane (P) of the same direction as the radiations, and in that the axis (zz') of the arc of parabola is offset by a distance (d) with respect to the plane of symmetry (P), on the side of the arc of parabola (AA').

2. Concentrator device according to Claim 1, characterized in that the base of each element of the secondary reflector is constituted by at least one arc (BC, B'C') in ellipse form of which the foci (C',A'; C,A) are constituted on the one hand by the downstream end (C';C) of the other arc of ellipse (B'C'; BC) and by the intersection of the straight line (CB'; C'B) joining the downstream end (C; C') of this arc of ellipse (BC; B'C') to the upstream end (B'; B) of the other arc of ellipse (B'C'; BC) with the arc of parabola (A'A).

3. Device according to Claim 2, characterized in that the receiver element (16) comprises a plane upstream face in contact with the downstream generatrices issuing from the downstream ends (C, C') of the two elements (BC, B'C') constituting the secondary reflector.

4. Device according to Claim 3, characterized in that the receiver element (16) is constituted by a cylindrical tube of rectangular section, having a heat-transfer fluid passing therethrough.

5. Device according to Claim 2, characterized in that the receiver element (16) is constituted by an electrical collector.

6. Device according to Claim 1, characterized in that the receiver element is constituted by a cylindrical tube of circular section, the elements constituting the secondary reflector having bases constituted by a generalized involute of circle (BC, B'C') joined to the surface of the receiver element by at least one arc of involute of circle (DE, D'E').

7. Device according to Claim 6, characterized in that the receiver element (20) is tangential to a plane whose base is constituted by a segment (CC') joining the downstream ends (C, C') of the arcs of generalized involute of circle (BC; B'C') and by the generatrices of the reflector issuing from these ends (C, C').

8. Device according to any one of the preceding Claims, characterized in that the angle ($\varphi$) included between the axis (zz') issuing from the focus (F) of the arc of parabola (A'A) constituting the base of the principal reflector and the segment of straight line joining this focus (F) to the end (A') of the arc of parabola (AA') closest to the axis of symmetry (yy') of the concentrator, is included between 1° and 5°.

9. Device according to any one of the preceding Claims, characterized in that the angle ($\varphi$) included between the axis (zz') issuing from the focus (F) of the arc of parabola (A'A) constituting the base of the principal reflector and the segment of straight line joining this focus (F) to the end (A) of the arc of parabola (AA') most remote from the axis of symmetry (yy') of the concentrator, is included between 30° and 120°.

10. Device according to Claim 6, characterized in that it comprises four concentrator elements, symmetrical in two's, with respect to the plane of symmetry (P) of the concentrator, the arcs of generalized involute being constituted by arcs of ellipse (B'$_1$C'$_1$, B$_1$C$_1$), the secondary reflector (60) of a first concentrator element being tangential to the plane of symmetry (P) of the concentrator device, and comprising two cylindrical parts with base of involute of circle respectively joining the downstream ends (C'$_1$; C$_1$) of the two arcs of ellipse (B'$_1$C'$_1$; B$_1$C$_1$) respectively to the lower part (D'$_1$) and substantially in the middle of the wall of the semi-circle of base of the receiver element (20), or point of junction (D$_1$), and a second concentrator element, disposed on the same side as the first with respect to the plane (P), comprising two cylindrical reflectors of which the base is respectively constituted by two arcs of ellipse ($B'_2C'_2$; $B_2C_2$) respectively extended by a segment of straight line ($C'_2D_1$) joining the downstream end of the first arc of ellipse ($B'_2C'_2$) to the point of junction ($D_1$), and by an arc of involute of circle ($D_2G$) issuing from the upper intersection ($D_2$) of said circle with the axis of symmetry (yy') and terminating at the intersection of the latter with the tangent (G'G) to said circle at the point of junction ($D_1$) followed by a segment of straight line (GK) parallel and of length equal to said segment of straight line ($C'_2D_1$) and by an arc of circle ($KC_2$) of radius equal to the segment ($C'_2C_2$) joining the two downstream ends ($C'_2$ and $C_2$).

11. Device according to any one of the preceding Claims, characterized in that the secondary reflectors (26, 43, 60, 62, 80) are contained in a cylindrical tube (40, 70) transparent to the radiations and whose generatrices are parallel to those of the reflectors.

12. Device according to Claim 10, characterized in that the cylindrical tube (40, 70) is tight with respect to the atmosphere and is placed in vacuo.

FIG. 1

FIG. 3

FIG. 2

EP 0 436 433 B1

FIG.5

FIG.4

FIG.6

FIG.7

FIG.8